## Europäisches Patentamt

(19) **European Patent Office**

**Office européen des brevets**

(11) Publication number: **0 209 762 B1**

(12) **EUROPEAN PATENT SPECIFICATION**

(45) Date of publication of the patent specification: **19.04.89**

(51) Int. Cl.⁴: **C 09 J 5/00**, B 32 B 7/12, F 16 S 1/00

(21) Application number: **86108872.2**

(22) Date of filing: **30.06.86**

(54) **Process to join sandwich panels with water-borne contact cement and apparatus.**

(30) Priority: **22.07.85 FR 8511735**

(43) Date of publication of application:
**28.01.87 Bulletin 87/5**

(45) Publication of the grant of the patent:
**19.04.89 Bulletin 89/16**

(84) Designated Contracting States:
**AT BE CH DE GB IT LI LU NL SE**

(56) References cited:
**DD-A-201 145**

**CHEMICAL ABSTRACTS, vol. 73, 1970, page 29, abstract no. 88572d, Columbus, Ohio, US; V.V. BELOZUB et al.: "Rapid drying of Nairit films by infrared radiation", & KOZH.- OBUV. PROM. 1970, 12(7), 48-51**

(73) Proprietor: **National Starch and Chemical Corporation, 10 Finderne Avenue Box 6500, Bridgewater New Jersey 08807 (US)**

(72) Inventor: **Magnaud, Gerard, 25 rue de Montriblond, F-69009 Lyon (FR)**
Inventor: **Ancey, Maurice, La Jardiniere Odenas, F-60460 St. Etienne des Oullieres (FR)**
Inventor: **Grepinet, Jean, 19 rue des Catalpas, F-69400 Gleize (FR)**
Inventor: **Mary, Adrien, 17 avenue du Dragon, F-93220 Gagny (FR)**
Inventor: **Kieffer, Annie, Les Rousses Montceaux, F-01090 Monimerle/Saone (FR)**
Inventor: **Mathis, Jean-Francois, 49 chemin des Muriers Ars Sur Formans, F-01480 Jassans (FR)**

(74) Representative: **Hagemann, Heinrich, Dr. Dipl.-Chem., Patentanwälte HAGEMANN & KEHL Ismaninger Strasse 108 Postfach 860329, D-8000 München 86 (DE)**

EP 0 209 762 B1

## Description

The invention concerns a process of joining sandwhich panels with water-borne contact adhesive cement by the action of radiation and an apparatus to carry out this process.

The realization of sandwhich panels used in building industries (subroofing panels, sheathing walls, interior partitions), in vehicle body industries, in furniture industries (desk tops, furniture, etc.) necessitates the joining of a panel facing on one or on both surfaces of an insulating material.

The insulting materials are, in general, chosen from among the rigid foams: polystyrene foam of variable density, extruded polystyrene with or without surface coating, polyurethane foam, PVC foam and phenolic foams, etc. Glass reinforced plastics, flakeboard and plywood materials can also be used.

Panel facings are, in general, chosen from among:
- metallic sheets, prelacquered or not (aluminum, steel) galvanized or electrogalvanized steel, of variable thickness, generally 4/10 to 10/10 mm;
- asbestos cement or cement mixed with asbestos fiber, stabilized or not;
- decorative laminates,
- plywood of variable thickness
- panels of chip heard fibers,
- enamelled steel panels, etc.

Several gluing processes have already been proposed for the manufacture of sandwich panels. Cited, in the first place, are the techniques of gluing, adhesively bonding, by means of contact cements or adhesives which are polychloroprene based adhesives in solution in organic solvents (ketonic, aliphatic, cycloalkane, aromatic). The term "contact adhesive" comes from the fact that, to effect a bond, the following process is usually involved:
- applying the adhesive through an appropriate method (gun, screen, roller) on each of the two materials to he joined;
- drying (evaporating of the solvents),
- assembling, and
- pressing (2 to 5 bars) for a very short time, under a nip roller, for example.

An industrial bonding chain within the "contact adhesive" process comprises the following elements:
- a spray apparatus, containing several air spray guns (ordinarily 2 to 6) moving perpendicularly in the direction the conveyor moves;
- a drying oven with forced convection hot air, equipped with a hood in which the solvents are vaporized. Depending on the equipment, the time of passage of the glued materials in the oven is 1 to 1.5 minutes;
- an indexing table on which the glued materials are assembled upon their exit from the drying oven;
- a rotary or nip press in which the assembly is submitted to pressures of 1.5 to 3 bars, critical to obtaining a useful bond.

The use of these gluing processes, employing polychloroprene adhesives with an organic solvent base presents certain advantages, among which are:
- applying adhesive with spray gun which allows a great speed;
- the versatility of the adhesive, which allows bonding of diverse materials;
- the pressing through a rotary press which permits pressing at the speed (of advancement of the chain) of 3 to 7m/minute

These adhesives present, nevertheless, inconveniences, and notably the aggressiveness of most solvents used toward the polystyrene as well as the important presence (approximately 80 % in weight of the adhesive) of very inflammable or noxious solvents: risk of fire, employees' health hazard, environment related hazards, and pollution.

Other bonding methods have been proposed to avoid the inconveniences mentioned above. They concern principally the use of polyurethane or epoxy adhesives with two components and 100 % dry solids, or polyurethane adhesives with 100 % dry solids, monocomponent, moisture curing through the humidity contained in the materials.

The advantages of these systems are the total absence of solvent, and the 100 % content of dry solids. The application of the adhesive takes place only on one of the materials to be joined. However, the reaction time is long, imposing the mobilization of the bonding to be effected under press during time periods which can vary from 1 to 12 hours.

There also exist polyurethane glues, monocomponent, moisture curing through reaction with the humidity of air and the materials, based in organic solvents to lower their viscosity and render them sprayable. Their advantage is the application on only one of the materials to be glued and their drawbacks are:
- the presence of organic volatile solvents (40 to 75 %);
- the reaction which results in a workable bend necessitates a relatively long pressing (30 minutes to several hours);
- the range of gluable materials is limited to those containing enough water to provoke the moisture curing of the glue line.

It follows that it would be beneficial to be able to profit from the advantages of contact adhesives, without being confronted with the drawbacks mentioned above for this type of adhesive when used in a solvent base.

These contact adhesives are available commercially in water base but their use is limited due to existing

EP 0 209 762 B1

drying equipment The "high density" infra-red drying ovens allow to rapidly dry a film of water-based glue (5 to 30 seconds) but only on material insensitive to heat because of the high temperature obtained in the equipment. In hot air drying ovens, the drying time is very long (10 to 30 minutes).

The DD-A-201 145 describes a procedure primarily useful for drying an aqueous gum film which is related to the fixation of "flocs" of cut fiber on a textile support. The products obtained can for example be uses as furniture covers, protective coverings for cars and wall papers. The heat supply must not take place rapidly, so that the moisture can escape without difficulty from the interior of the adhesive layer. A convection drying shall be excluded.

The object of the invention herein is to provide a new process for joining sandwich panels with water-borne contact adhesive cement which avoids the drawbacks of the preceding technique and permits the practitioner to take maximum advantage of these adhesives for the joining of sandwhich panels, even in the case where certain constituting elements of these panels are sensitive to heat.

There is a need to establish a process of drying allowing water (approx. 30 to 50 $g/m^2$) contained in the water-borne contact adhesive cement to evaporate in the evaporation time of organic solvents (approximately 60 seconds). This process can be implemented on existing industrial equipment whatever the panel material may be, and notably whether one deals with materials either insensitive to heat or materials very sensitive to heat, such as foamed or extruded polystyrenes which do not withstand a temperature above 70°C.

The present invention provides a process of joining sandwich panels with water-borne contact adhesive cement by the action of radiation which is characterized in that the panel coated with contact adhesive cement is exposed to infra-red radiation of wavelength between 2 and 4 μm, while carrying out the evacuation of the formed steam, and thereafter carrying out in known manner, the assembling of the coated dried panels to provide the sandwhich panels.

The apparatus necessary for carrying out the rapid drying process according to the invention is characterized in that it requires a drying oven in which the heating device is essentially constituted of a battery of transmitters of infra-red rays of an average wavelength between 2 to 4 μm preferably connected with a battery of transmitters of infra-red rays of short wavelength comprised between 0.76 and 2 μm. The functioning of the latter transmitters is commanded by a device detecting metallic surfaces, the said drying oven being, moreover, equipped with means of extraction of the water steam formed.

One skilled in the art can easily conceive the advantages presented by the present invention. These water-borne contact adhesive cements present all the interesting properties of solvent-based contact adhesive cements without their above-cited drawbacks; notably, replacing volatile and inflammable solvents with water suppresses any fire and pollution risk, while allowing use of products with higher solids.

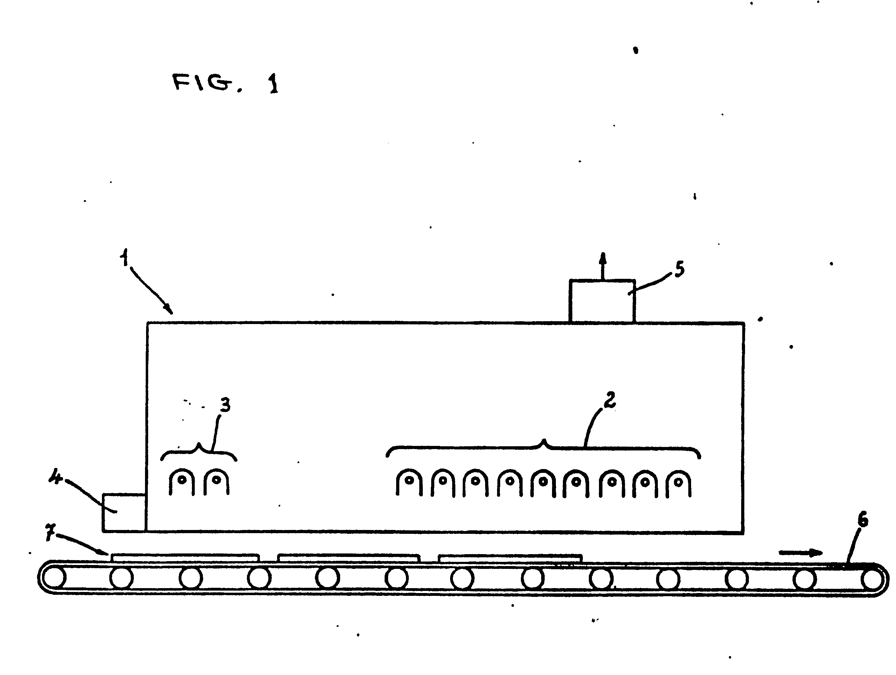

The present invention will be better understood and its advantages will be noted from the following description with reference to the attached drawing, Figure 1, the unique figure represents, in very diagrammatic form, the drying oven constituting the essential element of the apparatus according to the invention.

In the drawing (1) designates, in general manner, the drying oven, (2) the battery of average wave length infra-red transmitters, (3) the battery of short wave length infra-red transmitters, (4) the detector of metallic surfaces and (5) the means of evacuation of the steam formed from the water in the adhesive.

The drying oven (1) represented in the drawing is composed essentially of the following elements:
- a battery (2) of nine average IR radiants of 1.8 Kw, of wavelength comprised between 2 and 4 μm;
- two batteries (3) of three short IR radiants of 2 Kw, of wavelength comprised between 0.76 and 2 μm;
- a device (4) for detecting metallic panels of very weak thickness (less than or equal to 1 mm) and which controls the functioning of batteries of short SR radiants (3);
- means (5) of evacuation and ventilation;
- a conveyor (6) of adjustable speed, for example, between 0 and 2.7 m/minute which allows the introduction of coated (gummed) panels into the drying stove (1) for drying.

A potentiometer (not shown) regulates the power of the average IR radiants (2) from 0 to 100 %. Also foreseen, in case of the conveyor (6) stopping, is a device of automatic protection (not represented) avoiding the degradation of the panels present in the drying stove.

The process will now be described in detail.

The panels (7) which are to be assembled are coated, in conventional fashion, for example, through gun spraying, with a water-borne contact adhesive cement which is a mixture of polychloroprene latex (or other type of polymers: acrylics and SBR), of various resins (for example, "tackifying" resins of which the goal is to improve the gluing power and/or adherence) and of various adjuvants: tensio active, thickening, vulcanization agents, antioxidants, and the like. Such a water-borne cement contains approximately 30 to 65 % dry solids.

For example, a polychloroprene cement based on the following is used:
- Latex 671 (du pont de Nemours)    100 parts
- Antioxidant                          2 parts
- Phenolic terpene resin in emulsion  50 parts
- Zinc oxide                          10 parts

The polychloroprene latexes used can comprise in their molecule reactive groupings, allowing the eventual utilization of a hardener to improve certain performance of the bonds obtained, such as resistance to humidity, and heat resistance.

3

In proceeding with the process, the drying oven is started;
- the air exhaust (5) assuring the evacuation of the moist air is started up; and
- the battery (2) of average IRs is started up (warm-up time for useful power: 5 to 10 minutes).

The glued panels (7) that are to be dried are placed onto the conveyor (6) and the speed is regulated to approx. 2.7 m/minute.

In instances where panels of metal sheet (of thickness 5/10mm) are presented on the conveyor under the detector (4), short infra-red batteries (3), all of which reach sufficient power in from 3 to 5 seconds, will be activated and insure a full drying of the glued metal sheet. Any means of detection can be used, for example, magnetic detection or detection based on the reflection characteristics of metallic surfaces.

The battery of short infra-red radiants (3) will not be started up when non-metallic panels (such as polystyrene) pass through; such panels will be submitted only to the action of the average infra-red radiations of the battery (2). A full drying has been obtained in a passing time of 36 seconds under a battery of nine radiants of 1.8 Kw at a distance of 1,650 mm, arranged at 230 mm above the conveyor (6), the power being regulated at 50 % of the maximum power.

It is advisable to provide, for the case when the process chain unexpectedly stops while a panel is in the oven, an automatic system which by augmenting the supply of air and diminishing the power of the average infra-red radiants lowers the temperature in the oven very rapidly. Other devices such as automatic reversal of the average IR radiants, and automatic setting up of screens which lower the exposure of the average IRs, can also be used.

It has thus been possible to completely dry in industrial conditions, in less than a minute, water-based contact cement fil deposited by means of automatic air spray guns at the rate of 55 and 80 g/m2 on the following materials:
- sheet of metal of pre-lacquered and clad aluminum alloys of 5/10 mm thickness currently designated by the tradename Stuco;
- sheet of metal of pre-lacqured aluminum of 5/10 mm thickness;
- polystyrene expansed uninterrupted (25 kg/m3) of 25 mm thickness;
- polystyrene extruded uninterrupted of 25 mm thickness, such as the one commercialized under the trademark Styrofoam;
- plywood of 3 mm thickness; and
- fiber panel of thickness 3 mm.

After having been glued and dried by passage through the drying oven (1), the following sandwich assemblies have been immediately realized:
- aluminum Stuco/plywood/polystyrene/plywood;
- aluminum Stuco/foamed polystyrene/wood fibers such as the one commercialized under the trademark Panosom;
- smooth aluminum/Styrofoam/plywood.

As soon as the assembly is realized, the thus constituted sandwich panels are pressed between the rollers of a calender (not represented).

Panel samples joined by the process herein have been tested in resistance to delamination by pulling the panel apart and comparing the test results to the same samples joined on the same chain employing a solvent-based contact glue.

The table below summarizes the test results obtained (average of five observations) of the following tests:
- measure of resistance to delamination in mPa, measured at ambient temperature and peel speed of 5 mm/minute, carried out in comparative manner, on panels glued with a contact adhesive cement with conventional organic solvent and on panels glued with a water-based contact adhesive cement, which panels are dried following the conditions of the process herein.

### TABLE I

| | Water-based contact adhesive cement | | solvent-based contact adhesive cement | |
|---|---|---|---|---|
| | MRTA[1] | Method of failure | MRTA[1] | Method of failure |
| Laminated/ Foamed Polystyrene | 0.32 | In the thickness of the polystyrene | 0.16 | Superficial cells of polystyrene |
| Smooth aluminum sheet/ extruded polystyrene (Styrofoam) | 0.36 | Separation of the surface skin | 0.25 | Partial separation of the surface skin |
| Panosom/polystyrene | 0.18 | Separation of 80 % of the superficial fibers | 0.16 | Separation of 50 % of the superficial fibers |
| Aluminum sheet Stuco/Expansed Polystyrene | 0.16 | Separation of the superficial cells at contact points | 0.15 | Separation of the superficial cells at contact points |

(1) MRTA = Measure of Resistance to Delamination (expressed in MPa)

These results show that use of the present process employing waterbase contact adhesive cements, suitably dried on the panels in accordance with the process of the invention, results in sandwich panels having stronger bends than those obtained with solvent based adhesive.

## Claims

1. A process of joining sandwich panels with water-borne contact adhesive cement by the action of radiation characterized in that the panel coated with contact adhesive cement is exposed to infra-red radiation of wavelength between 2 and 4 µm, while carrying out the evacuation of the formed steam, and thereafter carrying out in known manner, the assembling of the coated dried panels to provide the sandwhich panels.

2. The process of Claim 1 wherein the water-borne contact adhesive cement is a polychloroprene latex emulsion.

3. The process of Claim 2 wherein the polychloroprene latex emulsion contains a tackifying resin and one or more adjuvants.

4. The process of Claim 1, wherein the water-borne contact adhesive cement is an acrylic or SBR emulsion.

5. The process of Claim 1 wherein at least one of the panels to be joined is a material sensitive to temperatures above 70°C.

6. The process of Claim 1 wherein at least one of the panels to be joined is polystyrene.

7. The process of Claim 1 wherein at least one of the panels to be joined is metallic and is additionally submitted to the action of short infra-red radiations of wave length comprised between 0.76 and 2 µm

8. Apparatus for carrying out a process to join sandwich panels comprising a drying oven in which the heating device is essentially composed of a battery of transmitters of infra-red rays of average wavelength comprised between 2 and 4 µm, and is equipped with means for evacuating the formed steam.

9. The apparatus of Claim 8 wherein the battery of transmitters of infra-red rays of average wavelength is associated with a battery of transmitters of infra-red rays of short wavelength comprised between 0.76 and 2 µm, which are activated for drying metallic panels.

10. The apparatus of claim 8 comprising means for detecting accidental stoppage of the process chain and an automatic system for diminishing the power of the infra-red transmitters or increasing the supply of air.

## Patentansprüche

1. Verfahren zum Verbinden von Sandwich-Platten mit einem wässrigen Kontaktklebstoff durch Strahleneinwirkung, dadurch gekennzeichnet, daß die mit Kontaktklebstoff beschichtete Platte Infrarotstrahlen einer Wellenlänge zwischen 2 und 4 µm ausgesetzt wird, während das Absaugen des gebildeten Dampfes durchgeführt wird, und danach das Zusammensetzen der beschichteten, getrockneten Platten zur Erzeugung von Sandwichplatten in bekannter Weise durchgeführt wird.

2. Verfahren nach Anspruch 1, wobei der wässrige Kontaktklebstoff eine Polychloropren-Latex-Emulsion ist.

3. Verfahren nach Anspruch 2, wobei die Polychloropren-Latex-Emulsion ein klebrigmachendes Harz und einen oder mehrere Hilfsstoffe enthält.

4. Verfahren nach Anspruch 1, wobei der wässrige Kontaktklebstoff eine Acryl- oder SBR-Emulsion ist.

5. Verfahren nach Anspruch 1, wobei wenigstens eine der zu verbindenden Platten ein Material ist, das gegen Temperaturen über 70°C empfindlich ist.

6. Verfahren nach Anspruch 1, wobei wenigstens eine der zu verbindenden Platten Polystyrol ist.

7. Verfahren nach Anspruch 1, wobei wenigstens eine der zu verbindenden Platten metallisch ist und zusätzlich der Wirkung von kurz welligen Infrarotstrahlen der Wellenlänge zwischen 0,76 und 2 µm ausgesetzt wird.

8. Vorrichtung zur Durchführung eines Verfahrens zum Verbinden von Sandwich-Platten, enthaltend einen Trocknungsofen, in dem die Heizvorrichtung im wesentlichen aus einer Batterie von Strahlern von Infrarotstrahlen einer durchschnittlichen Wellenlänge von 2 und 4 µm gebildet und mit einer Vorrichtung zum Absaugen des gebildeten Dampfes versehen ist.

9. Vorrichtung nach Anspruch 8, wobei die Batterie von Strahlern von Infrarotstrahlen durchschnittlicher Wellenlänge mit einer Batterie von Strahlern von Infrarotstrahlen kurzer Wellenlänge zwischen 0,76 und 2 µm kombiniert ist, die zum Trocknen metallischer Platten in Betrieb gesetzt werden.

10. Vorrichtung nach Anspruch 8, die eine Vorrichtung zum Feststellen nicht vorhersehbaren Stoppens der Verfahrenskette und ein automatisches System zur Verringerung der Leistung der Infrarotstrahler oder zur Erhöhung der Luftzufuhr umfaßt.

**Revendications**

1. Procédé de solidarisation de panneaux sandwichs à l'aide d'une colle de contact à base aqueuse, sous l'action d'un rayonnement, caractérisé en ce que le panneau revêtu avec la colle de contact est exposé au rayonnement infra-rouge d'une longueur comprise entre 2 et 4 μm, en réalisant l'évacuation de la vapeur formée, et en réalisant ensuite de manière connue l'assemblage des panneaux séchés pour créer les panneaux sandwichs.

2. Procédé selon la revendication 1, dans lequel la colle de contact à base aqueuse est une émulsion de polychloroprène latex.

3. Procédé selon la revendication 2, dans lequel l'émulsion polychloroprène latex contient une résine collante et un adjuvant ou plus.

4. Procédé selon la revendication 1, dans lequel la colle de contact à base aqueuse est une émulsion acrylique ou SBR.

5. Procédé selon la revendication 1, dans lequel au moins l'un des panneaux à solidariser est un matériau sensible aux températures supérieures à 70°C.

6. Procédé selon la revendication 1, dans lequel au moins l'un des panneaux à solidariser est un polystyrène.

7. Procédé selon la revendication 1, dans lequel au moins l'un des panneaux à solidariser est métallique et est de plus soumis à l'action de rayonnement infra-rouge court, d'une longueur d'onde comprise entre 0,76 et 2 μm.

8. Appareillage pour exécuter un procédé de solidarisation de deux panneaux sandwichs comprenant un four de séchage dans lequel le dispositif de chauffage est essentiellement composé d'une batterie d'émetteurs à rayons infra-rouges d'une longueur d'onde moyenne comprise entre 2 et 4 μm et qui est équipé de moyens d'évacuation de la vapeur formée.

9. Appareillage selon la revendication 8, dans lequel la batterie d'émetteurs à rayons infra-rouges de longueur d'onde moyenne est associée à une batterie d'émetteurs à rayons infra-rouges de longueur d'onde courte, comprise entre 0,76 et 2 μm, activés pour sécher les panneaux métalliques.

10. Appareillage selon la revendication 8, comprenant des moyens pour détecter l'arrêt accidentel de la chaîne de procédé et un système automatique pour diminuer la puissance des émetteurs à infra-rouges ou augmenter l'alimentation en air.

FIG. 1

EP 0 209 762 B1